# EUROPEAN PATENT APPLICATION

(11) **EP 4 434 785 A1**
(43) Date of publication of application: **25.09.2024**
(21) Application number: 23162969.2
(22) Date of filing: 20.03.2023
(51) Int. Cl.: B60K 1/04, B60K 1/00

(54) **VEHICLE STRUCTURE ARRANGEMENT**

(71) Applicant: Ford Global Technologies, LLC, Dearborn, MI 48126 (US)
(72) Inventor: JONES, Matt, Chelmsford, CM2 6GZ (GB); STAINES, Brad, Bishop's Stortford, CM23 3PL (GB)
(74) Representative: Haley Guiliano International LLP

(57) **Abstract**

An arrangement for a vehicle is described, the arrangement comprising a first member and a second member, the first member configured to be attached to a structure within the vehicle, and the second member configured to be attached to the vehicle itself, wherein the second member is positioned such that it engages with the first member and controls the movement of the structure in a collision direction during a collision event, such that during the collision event, the arrangement moves between a first condition in which the first member and the second member are in an non-engaged state, a second condition in which movement of the structure causes the first member and the second member to move into an engaged state, and a third condition in which the first member and the second member remain in an engaged state, wherein the engagement causes the structure to move in the collision direction.

## Description

### Background

The invention relates to the prevention of damage to structures within a vehicle by restricting or controlling the movement of structures within a vehicle, before, during and after a collision event.

### Summary

The automotive industry seeks ways to improve vehicles. There are structures within vehicles that, in the event of a collision, may be damaged due to either deformation of the vehicle body and structures. Modern vehicles, especially vans or cargo-carrying vehicles, may be designed with tightly arranged components to maximise their useable load space. However, this poses a challenge for the protection of components which, in the event of a collision, may come into contact and cause further damage.

Furthermore, battery electric vehicles (BEV) present a special challenge as they incorporate a large battery which must be protected against damage. In order to address these challenges, there is a need for a protection structure that may restrict or control the movement of components within a vehicle, while also minimizing the risk of damage in the event of a collision.

In modern BEV vehicles, it is common to use a drive unit (DU) as part of the vehicle's propulsion system. The DU is typically an incompressible unit located within the front end of the vehicle, and during a collision, it may move directly back towards other parts of the vehicle such as the traction battery. In the absence of a suitable protection structure, the DU's movement may damage the battery and its contacts, which may potentially result in a loss of power or a fire hazard. Existing solutions to protect the battery typically involve increasing the length of the vehicle, which may be undesirable in terms of fuel efficiency, manoeuvrability, parking, and transportation logistics.

According to some aspects of the disclosure, devices and methods are provided that comprise an arrangement for a vehicle, the arrangement comprising a first member and a second member. The first member configured to be attached to a structure within the vehicle and the second member configured to be attached to the vehicle itself. The second member is positioned such that it engages with the first member and controls the movement of the structure in a collision direction during a collision event, such that during the collision event, the arrangement moves between: a first condition in which the first member and the second member are in an non-engaged state; a second condition in which movement of the structure in the collision direction causes the first member and the second member to move into an engaged state; and a third condition in which the first member and the second member remain in an engaged state, wherein the engagement causes the structure to move in the collision direction.

In some examples, the first member is a hook configured to engage with the structure.

In some examples, the first member is a bar configured to engage with the structure.

In some examples, the collision direction is movement away from an axis of the vehicle which passes from front to rear thereof.

In some examples, the second member guides the first member and the structure attached to the first member to rotate around a rotation axis defined by the width of the vehicle and displace in a predetermined direction along a translation axis defined by the height of the vehicle.

In some examples, the first member is securely attached to the structure such that the first member and the structure are fixed in their relative positions.

In some examples, the second member is securely fixed to the structure of the vehicle such that the second member is fixed with respect to the vehicle.

In some examples, the structure is a drive unit (DU).

In some examples, the second condition is a collision state in which the body of the vehicle is deformed such that first member makes contact and engages with the second member; such that the second member restricts the movement of the first member and the structure to an axis defined by the width of the vehicle.

In some examples, the second member is configured to be in tension when engaged with the first member.

In some examples, the third condition is a post-collision state in which the first member is engaged with the second member; the first member and the structure being biased, by the shape and positioning of the second member, to rotate around an axis defined by the width of the vehicle and displace in a predetermined direction along a translation axis defined by the height of the vehicle.

In some examples, the first condition is a normal state in which the first member and the second member are separate and unengaged.

In some examples, a vehicle is provided which comprises the arrangement described herein.

In some examples, a drive arrangement for a vehicle is provided which comprises the arrangement.

In some examples, drive arrangement further includes an electrical energy store, and wherein the first member and the second member, in any one of the first, second, and third conditions, prevent the structure from making contact with the electrical energy store.

In some examples, a vehicle is provided which comprises the drive arrangement described herein.

### Figures

The above and other objects and advantages of the disclosure will be apparent upon consideration of the following detailed description, taken in conjunction with the accompanying drawings, in which:
FIG. 1 shows a simplified diagram of an arrangement for a vehicle, in accordance with some examples of the disclosure.
FIG. 2 shows a diagram of a vehicle without the arrangement described in the claims.
FIG. 3 shows a close-up view of an arrangement for a vehicle, in accordance with some examples of the disclosure.
FIG. 4 shows a close-up view of an arrangement and collision direction, in accordance with some examples of the disclosure.
FIG. 5a shows an exemplary side view of an arrangement for a vehicle in a first condition, in accordance with some examples of the disclosure.
FIG. 5b shows an exemplary top view of an arrangement for a vehicle a first condition, in accordance with some examples of the disclosure.
FIG. 6a shows an exemplary side view of an arrangement for a vehicle a second condition, in accordance with some examples of the disclosure.
FIG. 6b shows an exemplary top view of an arrangement for a vehicle a second condition, in accordance with some examples of the disclosure.
FIG. 7a shows an exemplary side view of an arrangement for a vehicle a third condition, in accordance with some examples of the disclosure.
FIG. 7b shows an exemplary top view of an arrangement for a vehicle a third condition, in accordance with some examples of the disclosure.
FIG. 8 shows an exemplary diagram of a vehicle comprising a drive arrangement which further comprises an arrangement and electrical energy store, in accordance with some examples of the disclosure.
FIG. 9 shows an exemplary diagram of a drive arrangement comprising an arrangement and electrical energy store, in accordance with some examples of the disclosure.

The figures herein depict various examples of the disclosed disclosure for purposes of illustration only. It shall be appreciated that additional or alternative structures, systems and methods may be implemented within the principles set out by the present disclosure.

### Detailed Description

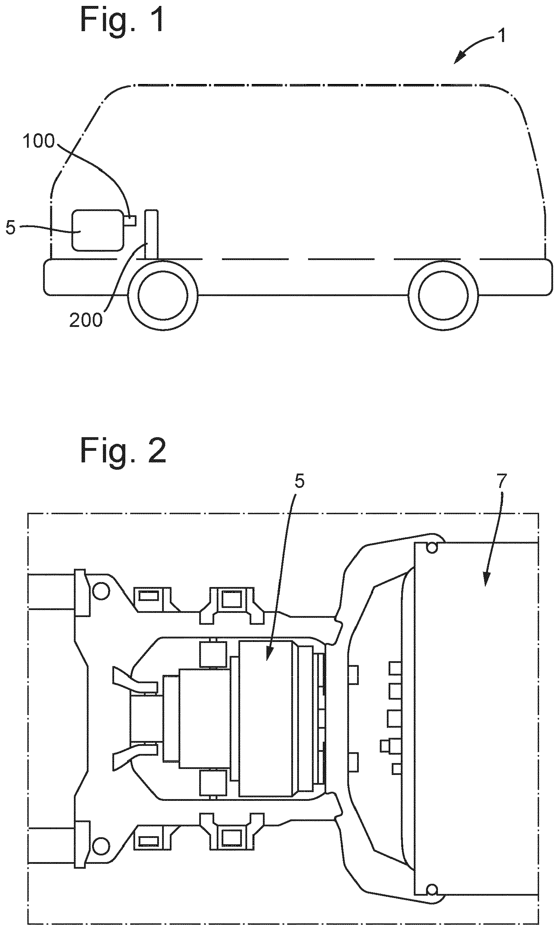

FIG. 1 shows a simplified diagram of an arrangement for a vehicle, in accordance with some examples of the disclosure. The arrangement for a vehicle comprises a first member 100 and a second member 200. The first member configured to be attached to a structure within the vehicle 5 and the second member is configured to be attached to the vehicle 1 itself.

The second member 200 is positioned such that it engages with the first member 100 and controls the movement of the structure 5 in a collision direction 50 during a collision event. During the collision event, the arrangement moves between a first 10, second 20 and third 30 condition. The collision direction 50 may be a single movement in a single direction, or a combination of movements in at least one direction. In the case that it is a combination of movements in at least one direction, the collision direction 50 may be a linear movement followed by a rotation, or may be a rotation followed by a linear movement.

In the first condition 10, the first member 100 and the second member 200 are in a non-engaged state. In the second condition 20, movement of the structure in the collision direction 50 causes the first member and the second member to move into an engaged state. In the third condition 30, the first member and the second member remain in an engaged state, wherein the engagement causes the structure 5 to move in the collision direction.

The first and second members may be any shape so long as they are able to fulfil their stated function. Their specific shapes will depend on the design and application requirements of the arrangement.

In some examples the first member may be a long bar with rounded edges and a cross-sectional shape that is optimized for strength and weight, such as an I-beam or a tube. The second member may be a shorter, more complex shape that is designed to fit snugly against the first member, such as a curved plate or a box-shaped structure with cut-outs and mounting holes.

In some examples the first member may be a circular or polygonal tube, while the second member may be a complementary shape with a similar cross-sectional profile that may slide snugly over the first member. In this case, the second member may be designed with a locking mechanism to prevent it from sliding off the first member during use.

In some examples the first member may be a flat plate or bar that is oriented perpendicular to the direction of the vehicle's movement, while the second member is a curved or angled plate that is attached to the first member and faces towards the front of the vehicle.

The first member could be a horizontal bar that spans the width of the vehicle, while the second member is a vertical bar that is attached to the first member at one end and is positioned towards the front or rear of the vehicle.

The first member may be attached to the structure and the second member may be attached to the vehicle in various ways. For example, the members may be bolted to the frame or chassis of the vehicle using brackets or mounting plates. In some examples the members may be attached using various attachment means, such as bolts, screws, clamps, brackets, or welding.

The structure in a vehicle refers to any component that may impact a component within the vehicle in the event of a collision. These components may include components such as the battery, fuel tank, or engine. For example, a drive unit (DU) in a hybrid or electric vehicle may potentially impact the traction battery if the battery is positioned directly behind it.

The structure within a vehicle may also be important, and in some examples the structure may also be a battery, fuel tank, or engine, or any other component of the vehicle that may potentially move during a collision and impact another component.

In some examples the vehicle may comprise multiple components that may potentially move during a collision and impact another component. In such a case, a single component may be both a structure and a component at the same time, within the context of this disclosure.

In any case, the shape, positioning and attachment type of each of the first and second members may be configured such that in the event of a collision event, the collision direction of the structure in all three conditions 10, 20 and 30 is pre-determined to avoid colliding with components within the vehicle and to protect the components of the vehicle.

The arrangement may be implemented under a number of different possible collision events. For example, a front-end collision, where the front of the vehicle collides with an obstacle or another vehicle. In this scenario, the first member of the structure may be designed to absorb the initial impact of the collision, restricting the movement of the structure in the first condition.

In some examples the arrangement may be implemented to operate in any collision direction or from a collision event which starts from any position on the vehicle. For example, a side collision, where the side of the vehicle is impacted by another vehicle or obstacle, a front-end or rear-end collision where the vehicle is impacted by another vehicle or obstacle in the front or rear of the vehicle and a rollover where the vehicle tips over onto its side or roof.

In such examples, the vehicle may be fitted with more than one arrangement whereby each arrangement is configured to control and guide the movement of the structure in a collision direction.

In some examples the one or more arrangements may be positioned in a way that allows them to work together to absorb the maximum amount of energy from an impact regardless of the direction of the collision event. For example, arrangements may be orientated at 45 degrees to a central axis of the vehicle thereby positioned to absorb the initial impact force in both an axis defined by a length of the vehicle and an axis defined by a width of the vehicle.

Overall, the members and their positioning may be positioned in such a way as to take into account the potential range of collision directions and forces and maximizes their ability to absorb energy and minimize damage to critical components of the vehicle.

The shape and positioning of the first and second members are designed to influence the movement of the DU in a desired direction during a collision. The members may be shaped and positioned in a way that causes the DU to move in a certain path, such as rotating around a specific axis or displacing along a particular direction. The design of the members may also take into account the expected direction and force of the collision, in order to provide the most effective guidance of the DU away from structures. The materials and rigidity of the members may also affect the path of the DU during a collision..

The direction of movement of the DU during a collision may be influenced by the shape and positioning of the first and second members. For example, if the first member has a curved shape and is positioned such that it contacts the second member in a specific way, it may cause the DU to rotate around a particular axis or displace along a certain direction.

Additionally, the shape and positioning of the members may allow for displacement of the DU in a certain direction. For example, if the second member is positioned in a way that restricts the movement of the first member to a specific direction, such as an axis defined by a height of the vehicle, then the DU may be displaced along that axis in a collision.

To guide the DU away from a battery positioned directly behind it in a front-end collision, the second member may be shaped and positioned to cause the first member to rotate around an axis defined by a width of the vehicle of the vehicle and displace along an axis defined by a height of the vehicle. This may be achieved by designing the second member to contact the first member in a way that biases it to rotate in this way upon impact.

In a similar way, other shapes and positions of the first and second members may be used to guide the DU in a desired direction. For example, a first member with a flattened shape may be used to limit the displacement of the DU along an axis defined by the length of the vehicle while causing it to rotate around an axis defined by a height of the vehicle, while a first member with an angled shape may be used to direct the DU's movement along a particular diagonal direction. The specific design will depend on the characteristics of the DU and the vehicle, as well as the desired outcome in the event of a collision.

The interaction between the first and second members may be broken down into three conditions. In the first condition, the first and second members are in a non-engaged, pre-collision state. This means that the first member is not in contact with the second member or, the first member may be in contact with the second member, but the structure is free to move within the vehicle without any guidance in a collision direction from the members. If a collision were to occur, the structure would move in a direction initially determined by the direction of a collision force, and then, the first member and the second member would move towards the second, collision state. Therefore, in this condition, the system is not engaged, and the collision direction of the structure is not being actively managed.

In the second condition, the structure and the attached first member are in motion due to a collision event, and the structure may begin to move in a direction that may cause damage to components within the vehicle. As the structure begins to move, the first member engages with the second member, which is positioned such that it controls the movement of the structure in a collision direction. This motion of the first member causes the arrangement to move from the non-engaged state of the first condition to an engaged state, in which the structure is prevented from moving in a direction that would cause damage to components within the vehicle. The engagement of the first and second members occurs as the structure moves, and the second member responds to the force applied by the structure to guide the motion of the structure away from components within the vehicle. The specific motion of the structure and the first member will depend on the shape and positioning of both of the members and the direction of movement of the structure. Ultimately, the motion of the members is guided by the goal of preventing damage to components within the vehicle during a collision event.

The third condition of the arrangement for a vehicle is reached when the first member and the second member remain in an engaged state, post collision, and the engagement causes the structure to move in the collision direction. In this condition, the arrangement functions to limit the displacement of the structure and guide its movement in a predetermined direction that avoids components of the vehicle.

The engaged first and second members control the movement of the structure in a way that prevents the collision from causing damage to components. The specific movement of the structure will depend on the shape and positioning of the first and second members.

The third condition provides a controlled movement of the structure, in which the first and second members work together to restrict the motion of the structure to the predetermined direction, avoiding collisions with components.

FIG. 2 shows a detailed internal view of a front end of vehicle 1, comprising a structure 5 and a component 7. The component is positioned directly behind the structure and in the case of a front-end collision event, the structure may potentially displace along an axis defined by the length of the vehicle and into the component.

In some examples, as previously stated, the structure may be an DU and the component may be a traction battery. This configuration is common in battery electric vehicles (BEV) and more specifically in load carrying ore commercial vehicles such as vans where the internal components of the vehicle drivetrain may be closely packed in order to maximise interior load space.

A vehicle that does not have this arrangement would be susceptible to damage to components within the vehicle in the event of a collision. For example, in a BEV, the battery is a component that should be protected against damage during a collision. In the absence of an arrangement, an DU located in front of the battery may move towards the battery during a collision, potentially causing damage to the battery and associated electrical contacts. This damage could lead to an increased risk of fire or electric shock, as well as significant repair costs. Without the protection offered by the arrangement, the battery and other components within the vehicle could be at a higher risk of damage.

DUs or similar structures may be located in different positions in a vehicle, depending on the design of the vehicle and the purpose of the DU. For example, in some vehicles, the DU may be located in the front end of the vehicle, close to the engine. In other vehicles, the DU may be located in the back of the vehicle, close to the rear axle.

In the case where the structure is located in the front end of the vehicle, if the structure is located near the front axle, it could potentially impact the fuel tank or other critical components located near the front of the vehicle during a collision. In general, the placement of an DU or other structure within a vehicle is determined by the design of the vehicle and the function of the structure.

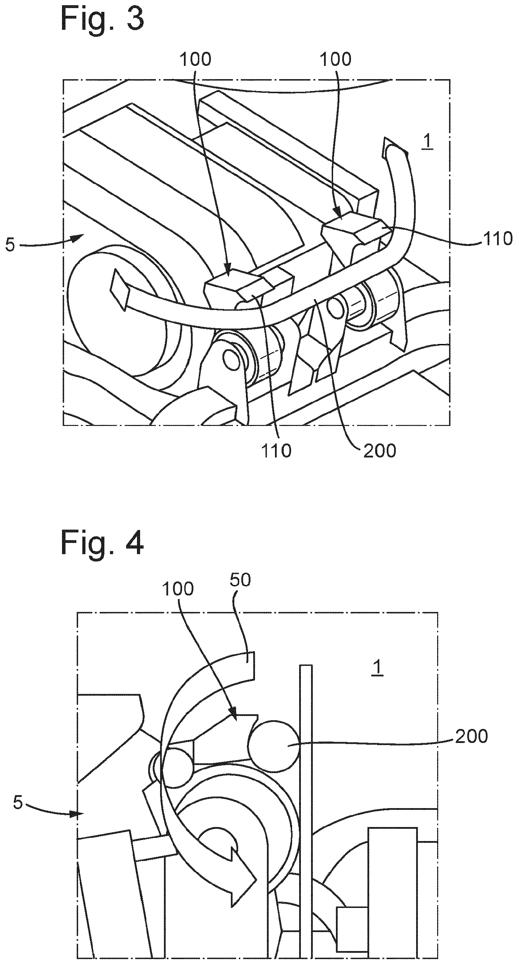

FIG. 3 shows a view of a structure 5 comprising an arrangement for a vehicle 1, in accordance with some examples of the disclosure. The arrangement comprises a first member 100 and a second member 200.

In some examples of the arrangement, the first member is designed as a hook-like device or multiple hook-like devices positioned along the back of the structure, with the specific placement and number of hooks depending on the particular requirements of the vehicle and the component being protected. For example, the hooks may be designed to engage with a corresponding structure, such as the second member, attached to the vehicle to form a secure connection that helps guide the movement of the structure during a collision event.

In some examples the shape of the second member is curved such that in the event of a collision, when the first member engaged with the second member, the tension force and subsequent restraining load in the second member builds up quickly over minimal displacement in any axis.

In some examples, the first member may be designed as one or more vertically positioned hooks, depending on the specific location and orientation of the component. The vertical positioning of the hooks may provide an advantage in situations where the movement of the structure may be more effectively guided along a specific axis.

Regardless of the specific design of the first member, the second member is rigidly attached to the vehicle and designed to accept the hook or hooks during a collision event, thereby controlling the movement of the structure in a predetermined direction. The design of the second member may vary depending on the specific location and orientation of the component being protected and may be positioned in a way that allows it to effectively engage with the first member and guide the movement of the structure.

FIG. 4 shows a side view of a arrangement for a vehicle 1. The side view illustrates a potential collision direction 50 in accordance with some examples of the disclosure.

The arrangement may be configured to control the movement of a structure within a vehicle during a collision event, regardless of the direction of impact. For example, in a front-end collision, the structure may move forward, while in a side collision, the structure may move laterally. The arrangement may be designed to guide the movement of the structure in a certain direction, such as rotating around a specific axis or displacing along a particular direction, in order to avoid impacting components within the vehicle.

For a structure such as an DU located at the front of a vehicle, the arrangement may be designed to control the displacement and rotation of the DU. For example, the first member may be positioned horizontally along the back of the DU, and the second member may be a bar rigidly attached to the vehicle, designed to accept the hooks of the first member and go into tension. The shape and positioning of the first and second members may be configured to bias the DU to rotate around an axis defined by the width of the vehicle and displace in a predetermined direction along a translation axis defined by the height of the vehicle, during a collision event.

In a rear-end collision, the DU may move backwards, and the arrangement may guide the movement of the DU by biasing it to rotate around an axis defined by the width of the vehicle and displace in a predetermined direction along a translation axis defined by the height of the vehicle. In a side collision, the DU may move laterally, and the arrangement may guide the movement of the DU by biasing it to rotate around an axis defined by the length of the vehicle and displace in a predetermined direction along a translation axis defined by the height of the vehicle.

The arrangement may be designed to provide a combination of movement directions depending on the collision event. For example, in a diagonal collision, the DU may move diagonally in a certain direction, and the arrangement may guide the movement by biasing the DU to rotate around any axis as necessary to avoid impacting components.

Overall, the shape and positioning of the first and second members may be varied to control the movement of the structure in any direction during a collision event, and to guide the movement of the structure away from components within the vehicle.

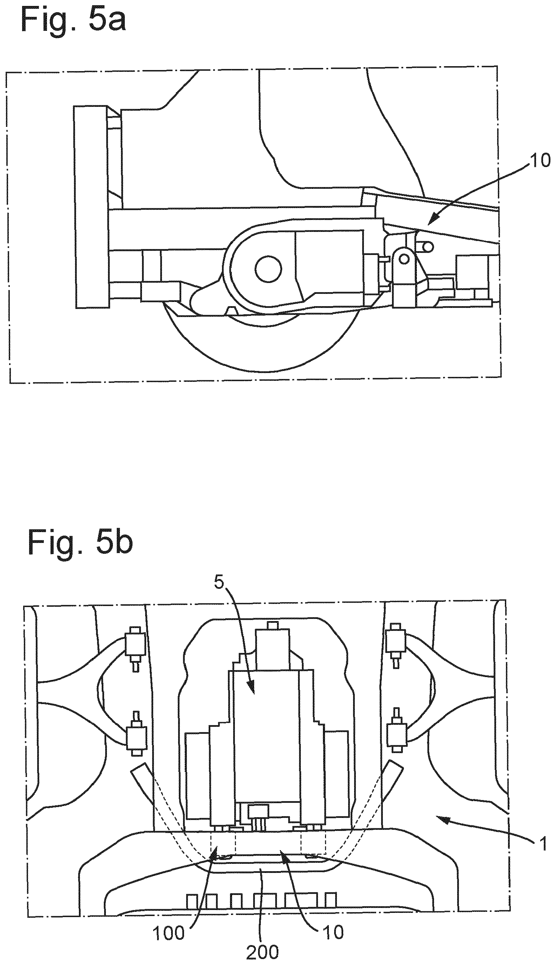

FIG. 5a and 5b show a detailed illustrations of the arrangement for a vehicle according to the present invention. In FIG. 5a, the arrangement includes a first member 100 and a second member 200, both of which are shown in a non-engaged, first condition 10. The first member 100 is configured to be attached to a structure within the vehicle, while the second member 200 is configured to be attached to the vehicle 1. The second member 200 is positioned in a way that it engages with the first member 100 and controls the movement of the structure during a collision event.

The first member 100 in FIG. 5a is in the form of a hook-like device or multiple hook-like devices positioned horizontally along the back of the structure. The second member 200 is in the form of a rigid bar that is securely fixed to the vehicle. The first member 100 is designed to engage with the second member 200 during a collision event, such that the engagement causes the structure to move in a controlled direction.

FIG. 5b shows a top-down view of the arrangement in FIG. 5a, with the first member 100 and the second member 200 shown in a non-engaged state. The second member 200 is fixed to the vehicle structure in a way that it may receive and engage the first member 100 during a collision event. In this configuration, the first member 100 is positioned horizontally, and the second member 200 is positioned vertically, such that it may engage with the first member 100 and control the movement of the structure in the event of a collision.

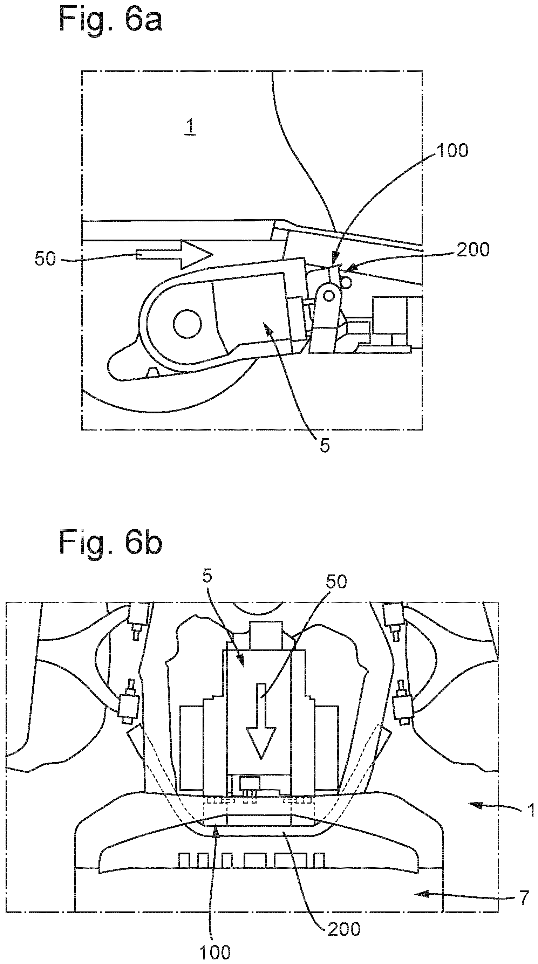

FIG. 6a and 6b illustrate the second condition 20 of the arrangement, which occurs during a collision event where the body of the vehicle is deformed such that the first member makes contact and engages with the second member. In FIG. 6a, the first member and the structure are shown in an engaged state where there is initial contact between the first and second members. As the collision force increases, the first member and the structure move further towards the second member, which causes the members to become fully engaged as shown in FIG. 6b.

The engagement of the first and second members creates a rigid connection between the structure and the vehicle. As a result, the second member restricts the movement of the first member and the structure in an axis defined by the length of the vehicle. The engagement of the members also guides the movement of the structure away from components of the vehicle.

In FIG. 6a and 6b, the first member is shown as a hook-like device that is attached to the structure within the vehicle, and the second member is a rigid bar that is attached to the vehicle itself. The shape and positioning of the first and second members are designed to control the movement of the structure during a collision event, as described in the earlier figures.

It should be noted that while FIG. 6a and 6b show a specific embodiment of the arrangement, other variations may also be possible. The specific shape and positioning of the first and second members, as well as the specific direction of movement of the structure, may vary depending on the design and needs of the vehicle.

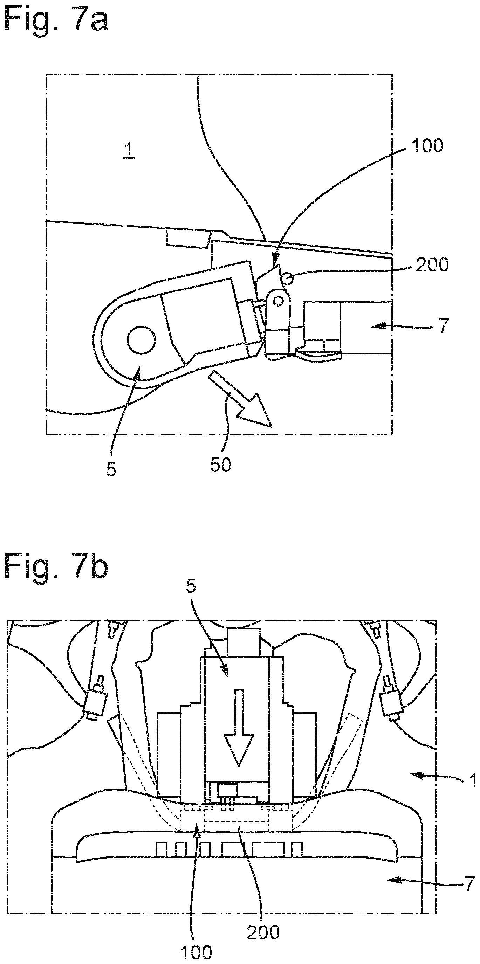

FIG. 7a and 7b depict the third condition 30 of the arrangement for a vehicle described herein. The two figures show the engaged state of the first member and the second member after a collision event, where the structure attached to the first member has been moved in the collision direction and is now restrained by the engagement between the first and second members.

In FIG. 7a, a side view of the arrangement is shown. The first member is positioned in a way such that it is fixed to a structure within the vehicle, while the second member is attached to the vehicle itself. The engagement between the two members has caused the structure to be moved in the collision direction, as depicted by the arrow in the figure. The engagement between the first member and the second member has restricted the movement of the structure, thereby protecting the components in the vehicle.

In FIG. 7b, a top-down view of the arrangement is shown. The first member and the second member are shown in a similar fashion as in FIG. 7a. The engagement between the first member and the second member has caused the structure to move towards the second member and the components have been protected from the movement of the structure. The engagement between the first member and the second member is shown in greater detail, where the hooks of the first member have engaged with the bar of the second member, creating a tension force which restricts the movement of the structure in the collision direction.

In the third condition, the engagement between the first and second members provides a mechanism for controlling the movement of the structure in a collision. Specifically, the engagement causes the structure to move in the collision direction while also rotating around an axis defined by the shape and position of the first and second members. The rotation helps to guide the movement of the structure away from components within the vehicle.

Depending on the specific design of the arrangement, the rotation may occur around any number of axes, including those defined by the width, length, or height of the vehicle. For example, in some embodiments, the second member may be positioned such that it guides the first member and attached structure to rotate around an axis defined by the width of the vehicle. In other embodiments, the rotation may occur around an axis defined by the height of the vehicle, or some other axis.

In addition to rotation, the engagement between the first and second members also provides a mechanism for controlling the displacement of the structure in the collision direction. The displacement may be in any predetermined direction, such as towards the rear of the vehicle, away from the side of the vehicle, or some other direction. The exact direction of displacement will depend on the specific design of the arrangement and the position of the structure within the vehicle.

Overall, the rotation and displacement in the third condition provide a mechanism for guiding the movement of the structure in a collision and helping to prevent it from impacting components within the vehicle.

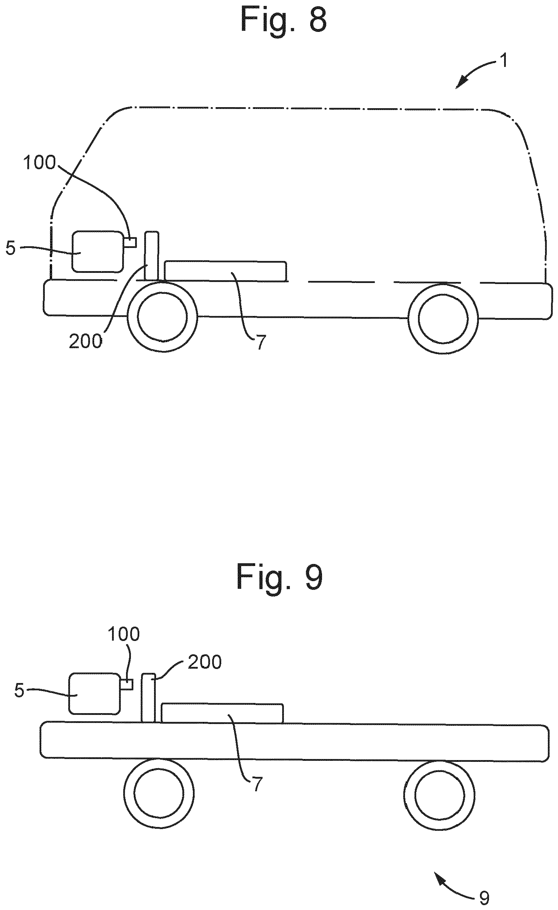

FIG. 8 shows a simplified diagram of a vehicle comprising a drive arrangement described in FIG. 9. The drive arrangement comprises a arrangement and a component which in this case is an electrical energy store. The drive arrangement comprises a first member 100 attached to a structure 5 and a second member 200 of the arrangement is attached to the vehicle 1.

The second member is positioned such that it engages with the first member in the event of a collision, as described in the previous figures. The engagement of the first and second members controls the movement of the structure 5 in a collision direction to protect the component.

The arrangement, as described in the previous figures, provides a means to protect the electrical energy store 7 from impact during a collision. The first member 100 of the arrangement is attached to the structure 5 and the second member 200 is attached to the vehicle, such that the movement of the structure is guided in a collision direction 50 to protect the component.

FIG. 9 shows a vehicle drive arrangement comprising an arrangement and an electrical energy store as the component. The drive arrangement is shown detached from a vehicle and can be interchanged between different models of vehicles. The arrangement consists of a first member 100 and a second member 200, as described in earlier figures, with the electrical energy store 7 positioned behind the second member 200.

The use of the drive arrangement design allows for the interchangeability of the electrical energy store 7 and drive components between different models of vehicles. This can provide a cost-effective and environmentally friendly solution for the replacement and maintenance of vehicle components. The arrangement of the drive arrangement helps to protect the electrical energy store 7 and other components during collisions.

This disclosure is made for the purpose of illustrating the general principles of the systems and processes discussed above and are intended to be illustrative rather than limiting. More generally, the above description is meant to be exemplary and not limiting and the scope of the disclosure is best determined by reference to the appended claims. In other words, only the claims that follow are meant to set bounds as to what the present disclosure includes.

While the present disclosure is described with reference to particular example applications, it will be appreciated that the disclosure is not limited hereto and that particular combinations of the various features described and defined in any aspects can be implemented and/or supplied and/or used independently. It will be apparent to those skilled in the art that various modifications and improvements may be made without departing from the scope and spirit of the present disclosure. Those skilled in the art would appreciate that the actions of the processes discussed herein may be omitted, modified, combined, and/or rearranged, and any additional actions may be performed without departing from the scope of the disclosure.

Any system features as described herein may also be provided as a method feature and vice versa. As used herein, means plus function features may be expressed alternatively in terms of their corresponding structure. It shall be further appreciated that the systems and/or methods described above may be applied to, or used in accordance with, other systems and/or methods.

Any feature in one aspect may be applied to other aspects, in any appropriate combination. In particular, method aspects may be applied to system aspects, and vice versa. Furthermore, any, some and/or all features in one aspect can be applied to any, some and/or all features in any other aspect, in any appropriate combination.

## Claims

1. An arrangement for a vehicle, the arrangement comprising a first member and a second member;
the first member configured to be attached to a structure within the vehicle; and
the second member configured to be attached to the vehicle itself, wherein the second member is positioned such that it engages with the first member and controls the movement of the structure in a collision direction during a collision event, such that during the collision event, the arrangement moves between:
a first condition in which the first member and the second member are in an non-engaged state;
a second condition in which movement of the structure causes the first member and the second member to move into an engaged state; and
a third condition in which the first member and the second member remain in an engaged state, wherein the engagement causes the structure to move in the collision direction.

2. The arrangement of claim 1, wherein the first member is a hook configured to engage with the structure.

3. The arrangement of claim 1 or claim 2, wherein the second member is a bar configured to engage with the structure.

4. The arrangement of any preceding claim, wherein the collision direction is movement away from an axis of the vehicle which passes from front to rear thereof.

5. The arrangement of claim 4, wherein the second member guides the first member and the structure attached to the first member to rotate around a rotation axis defined by the width of the vehicle and displace in a predetermined direction along a translation axis defined by the height of the vehicle.

6. The arrangement of any preceding claim, wherein the first member is securely attached to the structure such that the first member and the structure are fixed in their relative positions.

7. The arrangement of any preceding claim, wherein the second member is securely fixed to the structure of the vehicle such that the second member is fixed with respect to the vehicle.

8. The arrangement of any preceding claim, wherein the structure is a drive unit (DU).

9. The arrangement of any preceding claim, wherein the second condition is a collision state in which the body of the vehicle is deformed such that first member makes contact and engages with the second member; such that the second member restricts the movement of the first member and the structure to an axis defined by the width of the vehicle.

10. The arrangement of any preceding claim, wherein the second member is configured to be in tension when engaged with the first member.

11. The arrangement of any preceding claim, wherein the third condition is a post-collision state in which the first member is engaged with the second member; the first member and the structure being biased, by the shape and positioning of the second member, to rotate around an axis defined by the width of the vehicle and displace in a predetermined direction along a translation axis defined by the height of the vehicle.

12. A vehicle comprising an arrangement according to any one of claims 1 to 11.

13. A drive arrangement for a vehicle, the drive arrangement comprising an arrangement according to any one of claims 1 to 11.

14. The drive arrangement of claim 13 further including an electrical energy store, and wherein the first member and the second member, in any one of the first, second, and third conditions, prevent the structure from making contact with the electrical energy store.

15. A vehicle comprising a drive arrangement according to any one of claims 12 or 13.
